# EUROPEAN PATENT APPLICATION

(11) **EP 4 825 905 A1**
(43) Date of publication of application: **21.10.2026**
(21) Application number: 25760783.8
(22) Date of filing: 14.02.2025
(51) Int. Cl.: C08K 5/5313, C08K 5/5333, C08L 75/08

(54) **ORGANIC PHOSPHATE FLAME RETARDANT, PREPARATION METHOD AND FLAME-RETARDANT POLYMER MATERIAL CONTAINING ORGANIC PHOSPHATE**

(30) Priority: 29.02.2024 CN 202410228493
(71) Applicant: Jiangsu Liside New Material Co., Ltd., Taizhou, Jiangsu 225500 (CN)
(72) Inventor: LI, Jinzhong, Taizhou, Jiangsu 225500 (CN); YANG, Jianwei, Taizhou, Jiangsu 225500 (CN)
(74) Representative: Fabry, Bernd
(86) International application number: PCT/CN2025/077432
(87) International publication number: WO 2025/180240

(57) **Abstract**

The present disclosure provides an organic phosphate flame retardant, a preparation method and a flame-retardant polymer material containing the organic phosphate. The organic phosphate flame retardant provided in the present disclosure comprises a component A and a component B, wherein the component A is selected from at least one of compounds as presented by formula (I), and the component B is selected from at least one of compounds as presented by formula (II). In formula (I), R₁ and R₂ are a C₁-C₆ alkyl, and R₃ is a C₁-C₈ alkyl. In formula (II), R₄ is methyl or ethyl, and R₅ and R₆ are a C₁-C₈ alkyl. When the organic phosphate flame retardant is applied to polyurethane foaming, a polyurethane raw material polyether can be endowed with good storage stability, and the polyurethane material can also be endowed with good flame-retardant stability and dimensional stability by the organic phosphate flame retardant.

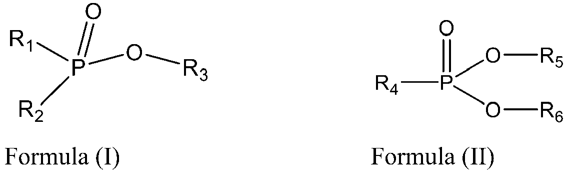

## Description

### CROSS REFERENCE TO THE RELATED APPLICATIONS

The present invention claims priority to Chinese Patent Application No. 2024102284938, filed with the China National Intellectual Property Administration on February 29, 2024, and entitled "ORGANIC PHOSPHATE FLAME RETARDANT, PREPARATION METHOD AND FLAME-RETARDANT POLYMER MATERIAL CONTAINING ORGANIC PHOSPHATE", which is incorporated herein by reference in entirety.

### TECHNICAL FIELD

The present invention relates to the technical field of flame-retardant materials, specifically, relates to an organophosphonate (organic phosphate) flame retardant, a preparation method therefor and a flame-retardant polymer material containing the organophosphonate.

### BACKGROUND ART

A polyurethane material is widely applied in industries, such as automobiles, home appliances, and building materials due to their excellent electrical property, mechanical property, acid and alkali resistance property, and adhesive properties. Polyurethane materials are highly flammable in air and decompose to produce large amounts of toxic fumes, causing fires and resulting in injuries and fatalities. Therefore, flame retardancy, especially halogen-free flame retardancy, is required for the polyurethane material in many fields and applications, such as building insulation materials, automotive interior materials, and home decoration materials.

Typically, flame retardancy of polyurethane can be achieved by directly adding flame retardants to the polyurethane material. Common flame retardants used for polyurethane are phosphate, such as tris(1-chloro-2-propyl) phosphate (TCPP), tris(chloroethyl) phosphate (TCEP), triethyl phosphate (TEP), and dimethyl methylphosphonate (DMMP). These phosphates have high flame-retardant efficiency and are easy to process and use, making them widely used in numerous polyurethane materials, including flexible polyurethane foam, rigid polyurethane foam, polyurethane elastomers, and polyurethane coatings.

However, traditional phosphate flame retardants, such as TCPP and TCEP, still contain halogens in their phosphate components, which cannot meet halogen-free flame retardancy requirements of current polymer materials. Other common halogen-free phosphate, such as TEP, have poor stability in polyether, a raw material for polyurethane. After long-term storage and subsequent foaming, an acid value increases due to acidolysis of TEP, affecting foaming of polyurethane. In addition, flame retardancy of polyurethane foam materials retarded by phosphate such as TEP decrease after long-term use. Furthermore, dimensional stability of the resulting polyurethane foam decreases, making it prone to produce phenomenon, such as warping, deformation, and elongation. Therefore, developing a phosphate flame retardant with good storage stability, little impact on a polyurethane foaming process, and minimal influence on the flame retardancy and the dimensional stability of the polyurethane foam, especially a halogen-free phosphate flame retardant, remains an urgent challenge to be solved in a polyurethane industry.

In view of this, the present invention is proposed.

### SUMMARY OF THE INVENTION

An objective of the present invention is to overcome the above deficiencies existing in the prior art by providing an organophosphonate flame retardant, a preparation method therefor and a flame-retardant polymer material containing the organophosphonate.

The technical problem addressed by the present invention can be solved by adopting following technical solutions.

The present invention provides an organophosphonate flame retardant, wherein the organophosphonate flame retardant includes a component A and a component B, the component A is selected from at least one of compounds as presented by formula (I), and the component B is selected from at least one of compounds as presented by formula (II): 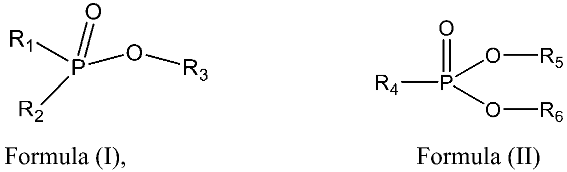
in Formula (I), R₁ and R₂ are a C₁-C₆ alkyl, and R₃ is a C₁-C₈ alkyl; and
in Formula (II), R₄ is methyl or ethyl, and R₅ and R₆ are a C₁-C₈ alkyl.

In some optional embodiments, in Formula (I), R₁ and R₂ are each independently selected from a straight-chain or branched C₁-C₆ alkyl group, and R₁ and R₂ can be the same or different from each other; R₃ is selected from a straight-chain or branched C₁-C₈ alkyl group; in Formula (II), R₄ is methyl or ethyl, and R₅ and R₆ are each independently selected from straight-chain or branched C₁-C₈ alkyl groups, and R₅ and R₆ can be the same or different from each other.

In some optional embodiments, a weight percentage of the component A and the component B in the compound of the organophosphonate flame retardant are respectively: the component A: 90.0 wt%-99.99 wt%, and the component B: 0.01 wt%-10.0 wt%.

In some optional embodiments, by weight percentage, a moisture content of the component A is < 0.3%; and a moisture content of the component B is < 0.3%.

In some optional embodiments, by weight percentage, a moisture content of the organophosphonate flame retardant is < 0.3%. The present invention further provides a preparation method for the above organophosphonate flame retardant, including: synthesizing a component A from dialkylphosphinic chloride and alkyl alcohol as raw materials, and then mixing the component A and a component B to obtain the organophosphonate flame retardant. In some optional embodiments, a preparation method for the component A is: reacting a dialkylphosphinic chloride with an alkyl alcohol at a temperature of 40 °C-200 °C.

In some optional embodiments, the temperature of the reacting is 40 °C-150 °C.

The present invention further provides a flame-retardant polymer material, wherein the flame-retardant polymer material includes the above organophosphonate flame retardant and a polymer matrix material.

In some optional embodiments, the polymer matrix material includes at least one selected from the group consisting of polyurethane, unsaturated polyester resin, epoxy resin, polycarbonate, polyester, polyphenylene ether, polyvinyl chloride, and polyacrylic acid.

In some optional embodiments, the polymer matrix material is selected from polyurethane, epoxy resin, or unsaturated polyester resin.

In some optional embodiments, weight percentages of the organophosphonate flame retardant and the polymer matrix material in the flame-retardant polymer material are: the organophosphonate flame retardant: 5 wt%-40 wt%, and the polymer matrix material: 60 wt%-95 wt%, respectively.

In some optional embodiments, the flame-retardant polymer material further comprises one or more of a functional additive and a flame retardant X.

In some optional embodiments, the functional additive includes at least one selected from the group consisting of a reinforcing agent, an anti-dripping agent, a stabilizer, a pigment, a char-forming catalyst, a dispersant, a nucleating agent, an inorganic filler, an organic filler, an antioxidant, and an antibacterial agent, wherein a mass content of the functional additive in the flame-retardant polymer material is 5%-40%.

In some optional embodiments, the flame retardant X is at least one selected from the group consisting of a phosphorus-based flame retardant and a nitrogen-based flame retardant, wherein a mass content of the flame retardant X in the flame-retardant polymer material is 0.1%-10%.

In some optional embodiments, the phosphorus-based flame retardant includes at least one selected from the group consisting of phosphate and a 9,10-dihydro-9-oxa-10-phosphaphenanthrene-10-oxide derivative.

In some optional embodiments, the nitrogen-based flame retardant includes at least one selected from the group consisting of melamine cyanurate, melamine polyphosphate, and etherified melamine-formaldehyde resin.

The beneficial effects of the present invention include the following.

The organophosphonate flame retardant provided herein includes specific component A and component B. When the organophosphonate flame retardant is applied to polyurethane foaming, it can impart good storage stability to the polyether (the raw material for polyurethane), as well as good flame-retardant stability and dimensional stability to the polyurethane material. In addition, the organophosphonate flame retardant provided in the present invention can also be used in various polymer matrix materials, such as unsaturated polyesters, epoxy resins, polycarbonates, polyesters, polyphenylene ethers, polyvinyl chloride, and polyacrylates, playing a role in flame retardancy and fire resistance.

### DETAILED DESCRIPTION OF EMBODIMENTS

To make objectives, technical solutions, and advantages of embodiments of the present invention clearer, the technical solutions of the embodiments of the present invention are described clearly and completely below. For specific conditions not specified in the embodiments, conventional conditions or conditions recommended by the manufacturer shall be followed. Reagents or instruments used without specified manufacturers are all conventional products that are commercially available.

An organophosphonate flame retardant, a preparation method therefor and a flame-retardant polymer material containing the organophosphonate provided in the embodiments of the present invention are described below.

In the first aspect, the embodiments of the present invention provides an organophosphonate flame retardant, wherein the organophosphonate flame retardant includes a component A and a component B, the component A is selected from at least one of compounds as presented by formula (I), and the component B is selected from at least one of compounds as presented by formula (II): 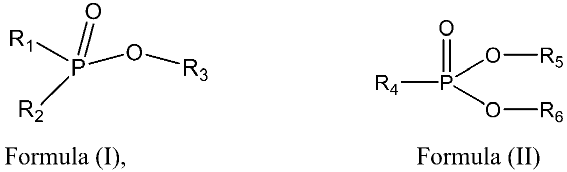
in Formula (I), R₁ and R₂ are a C₁-C₆ alkyl, and R₃ is a C₁-C₈ alkyl; and
in Formula (II), R₄ is methyl or ethyl, and R₅ and R₆ are a C₁-C₈ alkyl.

In some optional embodiments, in Formula (I), R₁ and R₂ are each independently selected from a straight-chain or branched C₁-C₆ alkyl group, and R₁ and R₂ can be the same or different from each other; R₃ is selected from a straight-chain or branched C₁-C₈ alkyl group.

In some optional embodiments, in Formula (II), R₄ is methyl or ethyl, and R₅ and R₆ are each independently selected from straight-chain or branched C₁-C₈ alkyl groups, and R₅ and R₆ can be the same or different from each other.

There is also a certain moisture content in the component A and the component B of the above organophosphonate flame. In some optional embodiments, by weight percentage, a moisture content of the component A is < 0.3%, and a moisture content of the component B is < 0.3%; further, the moisture content of the component A is < 0.1%, the moisture content of the component B is < 0.2%, and a moisture content of the organophosphonate flame retardant is < 0.3%; and further, the moisture content of the organophosphonate flame retardant is < 0.1%. A relatively high moisture content can affect use of dry organophosphonate, such as causing abnormal polyurethane foaming processes.

In the second aspect, the embodiments of the present invention further provide a preparation method for the above organophosphonate flame retardant, including: synthesizing the component A from dialkylphosphinic chloride and alkyl alcohol as raw materials, and then mixing the component A and the component B to obtain the organophosphonate flame retardant.

In some optional embodiments, a preparation method for component A provided by the embodiments of the present invention is: directly reacting a dialkylphosphinic chloride with an alkyl alcohol at a temperature of 40 °C-200 °C.

The use of a catalyst is optional in this process. When the catalyst is used, preferably, it is an organic amine.

In some optional embodiments, the catalyst can include an amine-based catalyst, such as at least one selected from triethylamine, triethanolamine, and N,N-dimethyl-p-toluidine.

During a preparation process of the above component A, when a temperature of the reacting is below 40 °C, a reaction rate is relatively slow; and when the temperature is above 200 °C, the raw materials are prone to oxidation, resulting in a yellowish discoloration of a final product.

In some optional embodiments, a reaction temperature is 40 °C-150 °C, such as 40 °C, 50 °C, 60 °C, 70 °C, 80 °C, 90 °C, 100 °C, 110 °C, 120 °C, 130 °C, 140 °C or any value within the range of 40 °C-150 °C or any range between any two values therein.

In the third aspect, the present invention further provides a flame-retardant polyurethane material, including the above organophosphonate flame retardant, and the organophosphonate flame retardant plays a role in flame retardancy and fire resistance of the polyurethane material.

The inventors creatively discovered that by adding an organophosphonate mixture, including the component A and the component B in proportion into the polyether (the raw material for polyurethane), the resulting polyether can be stored for a long time without affecting the foaming process. Furthermore, the polyurethane foam containing the organophosphonate flame retardant, including the component A and the component B, exhibits no abnormalities such as shrinkage, warping, or deterioration of surface flatness after long-term storage, demonstrating excellent dimensional stability. While the polyurethane foam including only component A has poor flame retardancy, a small amount of component B needs to be added to improve the flame retardancy thereof. Specifically, by weight percentage, a ratio of the component A to the component B is (90-99.99) : (0.01-10). Surprisingly, the inventors further unexpectedly discovered that adding a small amount of component B to component A can improve the performance of the resulting polyurethane foam, such as improving the uniformity of foam pore and the smoothness of polyurethane foam surfaces. However, if an addition amount of component B is too high, it will cause storage stability of the organophosphonate flame retardant in the polyether to deteriorate, affecting the foaming process of polyurethane and causing abnormalities such as core scorch and yellowing of polyurethane.

In some optional embodiments, the organophosphonate flame retardant disclosed in the present invention can be used in a polyurethane material, wherein the polyurethane material includes 5 wt%-40 wt% of the organophosphonate flame retardant and 60 wt%-95 wt% of the polyurethane matrix material. The polyurethane matrix material is a polymer synthesized from polyols, isocyanates, and chain extenders, such as at least one selected from the group consisting of polyester-based polyurethane, polyether-based polyurethane, polycarbonate-based polyurethane, and polycaprolactone-based polyurethane. A low addition amount of the organophosphonate flame retardant herein will not achieve a flame-retardant effect, and an excessively high addition amount will affect other properties of the flame-retardant material, such as reducing tensile and flexural properties of the flame-retardant material.

In some optional embodiments, the flame-retardant polymer material can include 5 wt%-35 wt% of the organophosphonate flame retardant and 65 wt%-95 wt% of the polyurethane matrix material.

In some optional embodiments, the mass content of the organophosphonate flame retardant in the flame-retardant polymer material is independently selected from any value of 5%, 8%, 10%, 15%, 20%, 25%, 30%, 35%, or 40%, or any range between any two values therein. Specifically, an addition amount of the organophosphonate flame retardant used depends on the structure of the polymer matrix material.

In practical applications, the above organophosphonate flame retardant provided in the present invention can further be used in various polymer matrix materials, such as unsaturated polyesters, epoxy resins, polycarbonates, polyesters, polyphenylene ethers, polyvinyl chloride, and polyacrylates, playing a role in flame retardancy and fire resistance.

When the organophosphonate flame retardant is used in these polymer matrix materials, the flame-retardant material can include 5 wt%-40 wt% of the organophosphonate flame retardant and 60 wt%-95 wt% of the polymer matrix material.

In some optional embodiments, the polymer matrix material in the flame-retardant polymer material is unsaturated polyester resin, epoxy resin, or polyurethane.

When the compound including the component A and the component B is actually used in the polymer matrix material, the two components can be mixed first and added to the polymer matrix material or a precursor thereof, or the two components can be added to the polymer matrix material or the precursor thereof, respectively. Finally, the resulting flame-retardant polymer matrix material includes the compound consisting of the component A and the component B.

In some optional embodiments, when the organophosphonate used in the polymer matrix materials, such as polyurethane, unsaturated polyester resin, epoxy resin, polycarbonate, polyester, polyphenylene ether, polyvinyl chloride, and polyacrylic acid, the flame-retardant material further includes a functional additive. The functional additive further comprises, for example, at least one selected from the group consisting of a reinforcing agent, an anti-dripping agent, a stabilizer, a pigment, a char-forming catalyst, a dispersant, a nucleating agent, an inorganic filler, an organic filler, an antioxidant, and an antibacterial agent.

In some optional embodiments, the mass content of the functional additive in the flame-retardant polymer material is 5%-40%, such as any value of 5%, 10%, 15%, 20%, 25%, 30%, 35%, or 40%, or any range between any two values therein.

In some optional embodiments, the flame-retardant polymer material further includes other flame retardant X. The flame retardant X can be selected, for example, from at least one of a phosphorus-based flame retardant and a nitrogen-based flame retardant.

In some optional embodiments, the phosphorus-based flame retardant can be at least one selected from phosphate and a 9,10-dihydro-9-oxa-10-phosphaphenanthrene-10-oxide (DOPO) derivative. In some optional embodiments, the phosphate can be a cyclic organophosphonate CU, and the DOPO derivative can be at least one of 6H-dibenzo[c,e][1,2]oxaphosphorin-6,6'-(1,4-ethanediyl)bis-6,6'-dioxide and 6H-dibenzo[c,e][1,2]oxaphosphorin-6,6'-(1,4-phenylethanediyl)bis-6,6'-dioxide.

In some optional embodiments, the nitrogen-based flame retardant can be at least one selected from the group consisting of melamine cyanurate, melamine polyphosphate, and etherified melamine-formaldehyde resin.

In some optional embodiments, a mass content of the flame retardant X in the flame-retardant polymer material can be 0.1%-10%, such as any value of 0.1%, 0.5%, 1.0%, 1.5%, 2.0%, 3.0%, 4.0%, 5.0%, 6.0%, 7.0%, 8.0%, 9.0%, and 10.0%, or any range between any two values therein. Following examples are given for illustrative purposes and are not intended to limit the scope of the present invention. Unless otherwise specified, all percentages in the following examples are by weight.

Raw materials:
(1) Diethylphosphinic chlorides (e.g., diethylphosphinic chloride and ethylbutylphosphinic chloride) and cyclic organophosphonate CU flame retardant were purchased from Jiangsu Liside New Material Co., Ltd.
(2) Methanol, n-propanol, n-butanol, 2-ethylhexanol (isooctanol), triethylamine and N,N-dimethyl-p-toluidine were purchased from Shanghai Aladdin Biochemical Technology Co., Ltd.
(3) Rigid polyurethane foam polyether 6305 and rigid foam silicone oil M88108 were purchased from Nanjing Meiside Chemical Co., Ltd.
(4) The rigid polyurethane foam catalyst was dimethylcyclohexylamine (PC-8), the blowing agent was pentafluoropropane (HFC-245FA), and polymeric MDI, triethyl phosphate (TEP), dimethyl methylphosphonate (DMMP) and diethyl ethylphosphonate (DEEP) were purchased commercially; dibutyl ethylphosphonate, dihexyl ethylphosphonate and dioctyl ethylphosphonate were prepared by referring to a method from the reference (An efficient method for the esterification of phosphonic and phosphoric acid using silica chloride (DOI:10.1016/j.tetlet.2006.02.159).
(5) The moisture contents of the component A and the component B in the phosphate flame retardant in the following examples were all <0.3%.

### Tests

(1) Acid value determination:
   The test was performed using a KOH ethanol solution titration method.
(2) ¹H NMR and ³¹P NMR tests:
   The tests were performed using a BRUKER AVANCE 400 instrument.
(3) Content test of the component A and the component B in the organophosphonate:
   The test was performed using gas chromatography or liquid chromatography.

Synthesis of methyl diethylphosphinate:
1) 80.1 g of diethylphosphinic chloride was dissolved in 200 ml of tetrahydrofuran solvent to obtain a solution M;
2) 30.2 g of methanol and 50.5 g of triethylamine catalyst was dissolved in 100 ml of tetrahydrofuran to obtain a solution N; and
3) at 66 °C, the solution M was slowly added to the solution N through a dropping funnel under stirring, and the reaction progress was monitored by ³¹P NMR spectroscopy. The addition was completed within approximately 1 h. After the addition was complete, stirring was continued for 2 h to terminate the reaction. An amine salt was filtered out, the solvent, triethylamine, was removed by rotary distillation, the resulting triethylamine was filtered again, and distilled under reduced pressure to obtain a methyl diethylphosphinate flame retardant. An acid value thereof was: 0.09 mg KOH/g.

Synthesis of propyl diethylphosphinate:
1) 80.3 g of diethylphosphinic chloride was dissolved in 200 ml of toluene solvent to obtain a solution M;
2) 58.6 g of n-propanol and 50.2 g of triethylamine catalyst was dissolved in 150 ml of toluene to obtain a solution N; and
3) at 100 °C, the solution M was slowly added to the solution N through a dropping funnel under stirring, and the reaction progress was monitored by ³¹P NMR spectroscopy. The addition was completed within approximately 50 min. After the addition was complete, stirring was continued for 2 h to terminate the reaction. An amine salt was filtered out, the solvent, triethylamine, was removed by rotary distillation, the resulting triethylamine was filtered again and distilled under reduced pressure to obtain a propyl diethylphosphinate flame retardant. An acid value thereof was: 0.12 mg KOH/g.

Synthesis of octyl diethylphosphinate:
1) 80.4 g of diethylphosphinic chloride was dissolved in 190 ml of toluene solvent to obtain a solution M;
2) 119.3 g of isooctanol and 42.6 g of N,N-dimethyl-p-toluidine catalyst was dissolved in 120 ml of toluene to obtain a solution N; and
3) at 105 °C, the solution M was slowly added to the solution N through a dropping funnel under stirring, and the reaction progress was monitored by ³¹P NMR spectroscopy. The addition was completed within approximately 2 h. After the addition was complete, stirring was continued for 3 h to terminate the reaction. An amine salt was filtered out, the solvent, N,N-dimethyl-p-toluidine, was removed by rotary distillation, the resulting N,N-dimethyl-p-toluidine salt was filtered again and distilled under reduced pressure to obtain an octyl diethylphosphinate flame retardant. An acid value thereof was: 0.16 mg KOH/g.

Synthesis of butyl dialkylphosphinate A:
1) 73.9 g of diethylphosphinic chloride and 6.3 g of ethylbutylphosphinic chloride was dissolved in 200 ml of toluene to obtain a solution M;
2) 71.3 g of butanol and 32.9 g of N,N-dimethyl-p-toluidine catalyst were dissolved in 150 ml of toluene to obtain a solution N; and
3) at 105 °C, the solution N was slowly added to the solution M through a dropping funnel under stirring, and the reaction progress was monitored by ³¹P NMR spectroscopy. The addition was completed within approximately 1.5 h. After the addition was complete, stirring was continued for 2 h to terminate the reaction. An amine salt was filtered out, the solvent was removed by rotary distillation, the resulting N,N-dimethyl-p-toluidine salt was filtered again and distilled under reduced pressure to obtain butyl dialkylphosphinate, wherein butyl diethylphosphinate was 94.9wt% and butyl ethylbutylphosphinate was 5.1wt%. An acid value of the dialkylphosphinate mixture was: 0.1 mg KOH/g.

Synthesis of butyl dialkylphosphinate B:
1) 73.9 g of diethylphosphinic chloride and 6.3 g of ethylbutylphosphinic chloride were dissolved in 200 ml of toluene to obtain a solution M;
2) 71.3 g of butanol and 32.9 g of N,N-dimethyl-p-toluidine catalyst were dissolved in 150 ml of toluene to obtain a solution N; and
3) at 105 °C, the solution N was slowly added to the solution M through a dropping funnel under stirring, and the reaction progress was monitored by ³¹P NMR spectroscopy. The addition was completed within approximately 1.5 h. After the addition was complete, stirring was continued for 2 h to terminate the reaction. An amine salt was filtered out, the solvent was removed by rotary distillation, the resulting N,N-dimethyl-p-toluidine salt was filtered again and distilled under reduced pressure to obtain butyl dialkylphosphinate, wherein butyl diethylphosphinate was 94.9wt%, butyl ethylbutylphosphinate was 4.7 wt%, and butyl dibutylphosphinate was 3.2 wt%. An acid value of the dialkylphosphinate mixture was 0.1 mg KOH/g.

Synthesis of butyl dialkylphosphinate C:
1) 73.9 g of diethylphosphinic chloride and 6.3 g of ethylbutylphosphinic chloride were dissolved in 200 ml of toluene to obtain a solution M;
2) 71.3 g of butanol and 32.9 g of N,N-dimethyl-p-toluidine catalyst were dissolved in 150 ml of toluene to obtain a solution N; and
3) at 105 °C, the solution N was slowly added to the solution M through a dropping funnel under stirring, and the reaction progress was monitored by ³¹P NMR spectroscopy. The addition was completed within approximately 1.5 h. After the addition was complete, stirring was continued for 2 h to terminate the reaction. An amine salt was filtered out, the solvent was removed by rotary distillation, the resulting N,N-dimethyl-p-toluidine salt was filtered again and distilled under reduced pressure to obtain butyl dialkylphosphinate, wherein butyl diethylphosphinate was 94.9wt% and butyl dibutylphosphinate was 0.2wt%. An acid value of the dialkylphosphinate mixture was 0.1 mg KOH/g.

Use of halogen-free flame retardant:
The above resulting flame retardants with different types of the component A and the flame retardant with the component B were mixed in a high-speed mixer for 1 min. After standing for 20 min, the mixture was applied to polyurethane. The specific operation process was as follows. The polyether 6305, the rigid foam silicone oil M88108, the catalyst PC-8, water, and the blowing agent HFC-245FA were added to a beaker in a mass ratio of 80:1.6:3.5:1.5:25.4 and stirred at a high speed for 15 s to obtain a mixed polyether. The organophosphonate flame retardant from the following examples and comparative examples below was then added. The mixture was stirred at a high speed for another 20 s to ensure uniform mixing of all components. Polymeric MDI was then added to the resulting mixed system, and the mixture was stirred again with a high-speed mixer for 10 s. Once the mixture turned white, it was poured into a mold to allow free foaming. After the reaction was complete, the resultant was placed in a 70 °C oven to mature for 5 h to obtain a high-efficiency, environmentally friendly flame-retardant polyurethane foam.

Compositions of the organophosphonate flame retardant in Examples 1 to 8 and Comparative Examples 1 to 8 were as follows:
Example 1
   98% methyl diethylphosphinate + 2% dibutyl ethylphosphonate
Example 2
   92% propyl diethylphosphinate + 8% dibutyl methylphosphonate
Example 3
   91% octyl diethylphosphinate + 9% dimethyl methylphosphonate
Example 4
   95% butyl dialkylphosphinate mixture A + 5% diethyl ethylphosphonate
Example 5
   99.98% butyl dialkylphosphinate mixture A + 0.02% dihexyl ethylphosphonate
Example 6
   97.8% propyl diethylphosphinate + 2.2% dibutyl ethylphosphonate
Example 7
   96.8% propyl diethylphosphinate + 1.2% dibutyl ethylphosphonate + 2% cyclic organophosphonate CU
Example 8
   98.8% propyl diethylphosphinate + 1.2% dioctyl ethylphosphonate
Example 9
   95% butyl dialkylphosphinate mixture B + 5% diethyl ethylphosphonate
Example 10
   95% butyl dialkylphosphinate mixture C + 5% diethyl ethylphosphonate
Comparative Example 1
   85% methyl diethylphosphinate + 15% dibutyl ethylphosphonate
Comparative Example 2
   92% propyl diethylphosphinate + 8% triethyl phosphate
Comparative Example 3
   100% octyl diethylphosphinate
Comparative Example 4
   70% butyl dialkylphosphinate mixture A + 30% diethyl ethylphosphonate
Comparative Example 5
   99.995% butyl dialkylphosphinate mixture A + 0.005% dihexyl ethylphosphonate
Comparative Example 6
   98% propyl diethylphosphinate + 2% cyclic organophosphonate CU
Comparative Example 7
   100% butyl dialkylphosphinate mixture A
Comparative Example 8
   100% dihexyl ethylphosphonate

The following Table 1 and Table 2 show the composition of polyurethane foam materials:

**Table 1**

| | | M1 | M2 | M3 | M4 | M5 | M6 | M7 | M8 | M9 | M10 |
|---|---|---|---|---|---|---|---|---|---|---|---|
| Addition Amount wt% | Mixed Polyether | 112 | 112 | 112 | 112 | 112 | 112 | 112 | 112 | 112 | 112 |
| | Polymeric MDI | 125 | 125 | 125 | 125 | 125 | 125 | 125 | 125 | 125 | 125 |
| | Example 1 | 16.8 | | | | | | | | | |
| | Example 2 | | 16.8 | | | | | | | | |
| | Example 3 | | | 16.8 | | | | | | | |
| | Example 4 | | | | 16.8 | | | | | | |
| | Example 5 | | | | | 22.4 | | | | | |
| | Example 6 | | | | | | 16.8 | | | | |
| | Example 7 | | | | | | | 22.4 | | | |
| | Example 8 | | | | | | | | 16.8 | | |
| | Example 9 | | | | | | | | | 22.4 | |
| | Example 10 | | | | | | | | | | 22.4 |

**Table 2**

| | | M11 | M12 | M13 | M14 | M15 | M16 | M17 | M18 |
|---|---|---|---|---|---|---|---|---|---|
| | Mixed Polyether | 112 | 112 | 112 | 112 | 112 | 112 | 112 | 112 |
| | polymeric MDI | 125 | 125 | 125 | 125 | 125 | 125 | 125 | 125 |
| | Comparative Example 1 | 16.8 | | | | | | | |
| | Comparative Example 2 | | 16.8 | | | | | | |
| Addition Amount wt% | Comparative Example 3 | | | 16.8 | | | | | |
| | Comparative Example 4 | | | | 16.8 | | | | |
| | Comparative Example 5 | | | | | 22.4 | | | |
| | Comparative Example 6 | | | | | | 22.4 | | |
| | Comparative Example 7 | | | | | | | 16.8 | |
| | Comparative Example 8 | | | | | | | | 16.8 |

Main performance indicators of the flame-retardant polyurethane foams of concern are as follows.
1) Flame-retardant stability test (oxygen index):
The resulting M1-M18 polyurethane foams were aged in an oven at 70 °C for 48 h and then left at room temperature for three days. Oxygen indexes were tested according to GB/T 2406.2-2009 to evaluate the change in the flame-retardant stability.
2) Storage stability (foaming after aging):
The mixed polyether was mixed with the flame retardant according to the proportions listed in Table 1 and Table 2, stored in an oven at 30 °C for 10 days, then mixed again with polymeric MDI and foamed to observe the foaming behavior.
3) Dimensional stability:
The resulting M1-M18 polyurethane foams were aged in an oven at 70 °C for 48 h and then left at room temperature for three days. Dimensional changes in sample lengths before and after aging were tested according to GB/T 8811-2008. $L % = \left(L2-L1\right) / L 1 \times 100 % ,$ where
L2 was a sample length after aging, and L1 was a sample length before aging.
4) Uniformity of foam pore
For the resulting M1-M18 polyurethane foams, cross-sections were cut, and number of abnormal foam pores within a 10 cm × 10 cm area was observed under a magnifying glass. It was recorded as abnormal if: a diameter (φ) of the foam pore > 5 mm and the number of the foam pores > 3, or a diameter (φ) of the foam pore > 3 mm and the number of the foam pores > 5.

**Table 3: Performance Test Results of Halogen-Free Flame-Retardant Polyurethane**

| | Oxygen Index - Before Aging | Oxygen Index - After Aging | Storage Stability (Foaming After Aging) | Dimensional Change of Foam | Foam Pore Uniformity |
|---|---|---|---|---|---|
| M1 | 22.1 | 21.9 | Normal foaming | 0.5% | Normal |
| M2 | 21.2 | 21.0 | Normal foaming | 0.6% | Normal |
| M3 | 20.5 | 19.8 | Normal foaming | 0.8% | Normal |
| M4 | 21.6 | 21.4 | Normal foaming | 0.6% | Normal |
| M5 | 23.5 | 23.3 | Normal foaming | 0.8% | Normal |
| M6 | 21.3 | 21.2 | Normal foaming | 0.7% | Normal |
| M7 | 23.4 | 23.1 | Normal foaming | 0.7% | Normal |
| M8 | 21.2 | 21.0 | Normal foaming | 0.8% | Normal |
| M9 | 22.5 | 22.3 | Normal foaming | 0.7% | Normal |
| M10 | 22.8 | 22.5 | Normal foaming | 0.8% | Normal |
| M11 | 19.9 | 19.4 | Foaming duration was shortened, affecting foaming | 1.1% | Normal |
| M12 | 20.5 | 20.0 | Foaming duration was shortened, foam showed core scorch | 0.8% | Normal |
| M13 | 18.9 | 18.7 | Normal foaming duration | 0.7% | Abnormal |
| M14 | 21.4 | 19.9 | Foaming duration was shortened, affecting foaming | 1.1% | Normal |
| M15 | 23.5 | 23.3 | Normal foaming duration | 0.8% | Abnormal |
| M16 | 23.2 | 23.0 | Normal foaming duration | 0.8% | Abnormal |
| M17 | 21.0 | 20.6 | Normal foaming duration | 0.8% | Abnormal |
| M18 | 19.0 | 18.4 | Foaming duration was shortened, foam showed core scorch | 1.9% | Normal |

As shown in Table 3, the organophosphonate flame retardant is obtained by mixing the component A and the component B in a certain proportion. When applied in polyurethane, the resulting polyurethane foam exhibits excellent flame retardancy, flame-retardant stability, and storage stability. The dimensional change rate of the foamed polyurethane foam is low (<1%), as demonstrated in M1-M10. The types and the addition amounts of the component A and the component B also play a crucial role. In Comparative Example 1 and Comparative Example 4, changing the usage ratio of the component A and the component B shortens the foaming duration of the organophosphonate flame retardant during use, thus affecting the application. The resulting polyurethane foam exhibits poor thermal dimensional stability, and the flame retardancy of the polyurethane foam decreases significantly after aging (the oxygen index decreased by 0.5). In Comparative Example 2, changing the type of component B, the foaming duration of the organophosphonate flame retardant during use becomes short, even showing core scorch in the foam. In Comparative Example 6, with the same variation of the type of Component B, the uniformity of the foam pore decreases during foaming of the organophosphonate flame retardant in polyurethane. Adding a portion of the component B to the component A (Examples 3, Comparative Example 3, Example 4, and Comparative Example 7) improves flame retardant efficiency of the resulting organophosphonate composition and the uniformity of the foam pore of the resulting polyurethane foam. In Comparative Example 5, reducing the usage amount of component B decreases the uniformity of the foam pore of the polyurethane foam. In Comparative Example 8, directly using component B as a flame retardant significantly reduces the flame-retardant stability and storage stability of the resulting polyurethane foam, and the foam size shows a significant change.

### INDUSTRIAL APPLICABILITY

When the organophosphonate flame retardant provided by the present invention is applied to polyurethane foaming, it can impart good storage stability to the polyether (the raw material for polyurethane), as well as good flame-retardant stability and dimensional stability to the polyurethane material. In addition, the organophosphonate flame retardant provided by the present invention can also be used in various polymer matrix materials, such as unsaturated polyesters, epoxy resins, polycarbonates, polyesters, polyphenylene ethers, polyvinyl chloride, and polyacrylates, playing a role in flame retardancy and fire resistance.

## Claims

1. An organophosphonate flame retardant, **characterized in that** the organophosphonate flame retardant comprises a component A and a component B, the component A is selected from at least one of compounds as presented by formula (I), and the component B is selected from at least one of compounds as presented by formula (II): 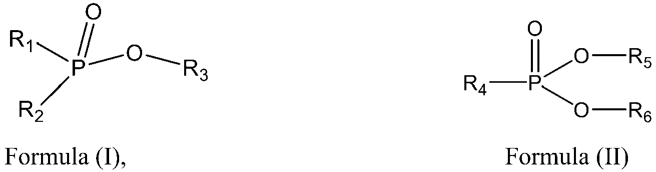
in Formula (I), R₁ and R₂ are a C₁-C₆ alkyl, and R₃ is a C₁-C₈ alkyl; and
in Formula (II), R₄ is methyl or ethyl, and R₅ and R₆ are a C₁-C₈ alkyl.

2. The organophosphonate flame retardant according to claim 1, wherein in Formula (I), R₁ and R₂ are each independently selected from a straight-chain or a branched C₁-C₆ alkyl group, and R₁ and R₂ can be the same or different from each other; R₃ is selected from a straight-chain or a branched C₁-C₈ alkyl group; in Formula (II), R₄ is a methyl or an ethyl, and R₅ and R₆ are each independently selected from a straight-chain or a branched C₁-C₈ alkyl groups, and R₅ and R₆ can be the same or different from each other.

3. The organophosphonate flame retardant according to claim 1 or 2, wherein weight percentages of the component A and the component B in the compound of the organophosphonate flame retardant are respectively: the component A: 90.0 wt%-99.99 wt%, and the component B: 0.01 wt%-10.0 wt%.

4. The organophosphonate flame retardant according to any one of claims 1 to 3, wherein by a weight percentage, a moisture content of the component A is < 0.3%; and a moisture content of the component B is < 0.3%.

5. The organophosphonate flame retardant according to any one of claims 1 to 4, wherein by a weight percentage, a moisture content of the organophosphonate flame retardant is < 0.3%.

6. A preparation method for the organophosphonate flame retardant according to any one of claims 1 to 5, **characterized by** comprising: synthesizing the component A from dialkylphosphinic chloride and alkyl alcohol as raw materials, and then mixing the component A and the component B to obtain the organophosphonate flame retardant.

7. The preparation method according to claim 6, wherein a preparation method for the component A is: reacting a dialkylphosphinic chloride with an alkyl alcohol at a temperature of 40 °C-200 °C.

8. The preparation method according to claim 7, wherein the temperature of the reacting is 40 °C-150 °C.

9. A flame-retardant polymer material, **characterized by** comprising a polymer matrix material and the organophosphonate flame retardant according to any one of claims 1 to 5.

10. The flame-retardant polymer material according to claim 9, wherein the polymer matrix material comprises at least one selected from the group consisting of polyurethane, unsaturated polyester resin, epoxy resin, polycarbonate, polyester, polyphenylene ether, polyvinyl chloride, and polyacrylic acid.

11. The flame-retardant polymer material according to claim 10, wherein the polymer matrix material is selected from polyurethane, epoxy resin, or unsaturated polyester resin.

12. The flame-retardant polymer material according to any one of claims 9 to 11, wherein weight percentages of the organophosphonate flame retardant and the polymer matrix material in the flame-retardant polymer material are: the organophosphonate flame retardant: 5 wt%-40 wt%, and the polymer matrix material: 60 wt%-95 wt%.

13. The flame-retardant polymer material according to any one of claims 9 to 12, wherein the flame-retardant polymer material further comprises one or more of a functional additive and a flame retardant X.

14. The flame-retardant polymer material according to claim 13, wherein the functional additive comprises at least one selected from the group consisting of a reinforcing agent, an anti-dripping agent, a stabilizer, a pigment, a char-forming catalyst, a dispersant, a nucleating agent, an inorganic filler, an organic filler, an antioxidant, and an antibacterial agent; a mass content of the functional additive in the flame-retardant polymer material is 5%-40%.

15. The flame-retardant polymer material according to claim 13 or 14, wherein the flame retardant X is at least one selected from the group consisting of a phosphorus-based flame retardant and a nitrogen-based flame retardant; a mass content of the flame retardant X in the flame-retardant polymer material is 0.1%-10%.

16. The flame-retardant polymer material according to claim 15, wherein the phosphorus-based flame retardant comprises at least one of phosphate and a 9,10-dihydro-9-oxa-10-phosphaphenanthrene-10-oxide derivative.

17. The flame-retardant polymer material according to claim 15, wherein the nitrogen-based flame retardant comprises at least one selected from the group consisting of melamine cyanurate, melamine polyphosphate, and etherified melamine-formaldehyde resin.
